# EUROPÄISCHE PATENTSCHRIFT

(11) **EP 3 282 354 B1**
(45) Veröffentlichungstag und Bekanntmachung des Hinweises auf die Patenterteilung: **10.03.2021**
(21) Anmeldenummer: 17179260.9
(22) Anmeldetag: 03.07.2017
(51) Int. Cl.: G06F 3/12, G06K 15/02, G06K 9/00

(54) **VERFAHREN ZUR VERBESSERUNG DER DRUCKQUALITÄT VON GRAFIKELEMENTEN**
METHOD FOR IMPROVING THE PRINT QUALITY OF GRAPHICAL ELEMENTS
PROCÉDÉ D'AMÉLIORATION DE LA QUALITÉ D'IMPRESSION D'ÉLÉMENTS GRAPHIQUES

(30) Priorität: 10.08.2016 DE 102016214811
(43) Veröffentlichungstag der Anmeldung: 14.02.2018
(73) Patentinhaber: Heidelberger Druckmaschinen AG, 69115 Heidelberg (DE)
(72) Erfinder: Gnutzmann, Frank, 24214 Gettorf (DE)

(56) Entgegenhaltungen:
- US-A1- 2003 058 246
- US-A1- 2008 100 624
- US-A1- 2009 213 422
- US-A1- 2012 226 823

## Beschreibung

Die vorliegende Erfindung betrifft ein Verfahren zur Verbesserung der Druckqualität von Grafikelementen, besonders von vektorisierten Schriftgrafiken, durch den Einsatz von Image Masks.

Die Erfindung liegt im technischen Gebiet der digitalen Druckvorstufe.

In der Druckindustrie werden zur Abarbeitung der Druckaufträge in den Workflow-Systemen der Druckereien sogenannte Jobs erstellt, welche sämtliche notwendigen Informationen, die zur Abarbeitung des Druckauftrages notwendig sind, enthalten. Diese Jobinformationen werden oft in sogenannten JDFs, den Job Definition Files, gespeichert. Die JDFs referenzieren dabei auf Jobinhaltsdateien im PDF-Format. Dies hat zur Folge, dass sie auch sämtliche Vor- und Nachteile, welche dem PDF-Standard immanent sind, aufweisen. So werden im PDF-Standard Texte normalerweise über Schriften, die meist im True Type oder Type 1-Format vorliegen, gezeichnet. Diese Schriften haben diverse interne Informationen, zum Beispiel über Hinting, Stammbreite, Versalhöhe, etc., die es Adobe oder anderen Interpreter-Herstellern erlauben, speziell bei niedrigeren Druckauflösungen optimale Ergebnisse zu erzielen.

Bei Grafikelementen im PDF, besonders bei Schriften die in Grafik gewandelt wurden, liegt jedoch nur eine Konturbeschreibung im PDF-internen Grafikformat in Form von kubischen Bézierkurven vor. Es gibt keine internen Schriftinformationen, die man für das notwendige Rendering auswerten könnte. Es ist dem die PDF verarbeitenden Workflowsystem noch nicht einmal bekannt, dass es sich überhaupt um Schrift handelt. Bei solchen Schriftgrafiken tritt nun eine Besonderheit des PDF-Standards zur Rasterung von Grafiken auf. Sobald die Linie einer zu füllenden Fläche ein Pixel berührt, wird dieses Pixel gefüllt. Dabei spielt es keine Rolle, wie hoch der Überlappungsanteil der Linie im Pixel ist. Das heißt, egal ob 90% oder 10% eines Rasterpixels von einer Linie abgedeckt werden, dieses Pixel wird entsprechend gefüllt. Das hat zur Folge, dass die Schriftgrafiken im Mittel an jeder Seite um ein halbes Pixel zu fett gedruckt werden. Das Problem wird umso gravierender, je kleiner oder filigraner die Schrift der Schriftgrafik oder je niedriger die Druckauflösung ist, was insbesondere bei Digitaldrucksystemen wie Inkjet eine Rolle spielt.

Als Lösung dieses Problems ist aus dem Stand der Technik bekannt, einen eigenen Grafik-Renderer für die Rasterung zu verwenden, der Pixel nur dann füllt, wenn sie von einer Linie der Schriftgrafik um mindestens 50% abgedeckt werden. Dieses Vorgehen hat dabei den Vorteil, dass so die Grafiken im Mittel stets die richtige Dicke haben. Es tritt jedoch der Nachteil auf, dass bei Anwendung des Renderers auf alle Grafikobjekte im PDF sehr dünne Linien komplett verschwinden können. Ein weiterer Nachteil ist, dass dieses 50%-System im PDF-Standard von Adobe nicht vorgesehen ist. Das Problem kann also durch eine reine Anwendung des PDF-Standards nicht behoben werden.

Eine weitere Möglichkeit, diesem Problem zu begegnen, ist der aus dem Stand der Technik bekannte Ansatz, sämtliche in einem PDF vorliegenden Schriftgrafiken gezielt vorab durch Berechnung von parallelen Konturen um zum Beispiel ein halbes Pixel abzusparen. Damit wird bei nachfolgender Anwendung des PDF-internen Renderings der Effekt der zu fetten Schriftgrößen kompensiert. Nachteil dieses Ansatzes ist jedoch, dass er sehr rechenintensiv ist und je nach Schriftart und Größe der Schriftgrafik unterschiedliche Breiten erfordert, um die abgespart wird. Dieses Verfahren ist somit sehr umständlich und wird daher in der Praxis oft nicht angewandt.

Ein weiteres aus dem Stand der Technik bekanntes Vorgehen betrifft die PCT-Anmeldung WO 2016/088345 A1. Diese beschreibt ein System zum Erkennen und Editieren handgezeichneter Schriftgrafiken im PDF. Dabei geht es jedoch im Rahmen der OCR-Schrifterkennung in ODF-Dokumenten um die Umwandlung von Schriftgrafiken, welche handgezeichnet sind oder handgeschrieben, in einem editierbaren Text. Eine Lösung des Problems zu fetter Schriftgrafiken durch das PDF-interne Rendering ist aus dieser Patentanmeldung nicht bekannt.

Aus der US-Patentanmeldung US 2008 0100624 A1 ist zudem eine Vorrichtung und ein Verfahren zur Bildverarbeitung bekannt, in welchem Schriftgrafiken die im Rahmen eines Druckprozesses, einschließlich eines Renderungsprozesses, verkleinert dargestellt werden sollen, hinsichtlich ihrer Lesbarkeit verbessert werden. Dies wird erreicht indem die Schriftgrafiken vor dem Rendern auf ihre Größe untersucht werden und falls sie einen bestimmten Schwellwert unterschreiten, durch eine für die Zielgröße besser geeignete Schriftart ersetzt werden.

Die US Patentanmeldung US 2009 0213422 A1 offenbart zudem ein Verfahren zum Drucken von Schriftgrafiken, in welchem automatisiert das passende Format für die Schriftgrafik auswählt, welches für das gewünschte Erscheinungsbild der gedruckten Schriftgrafik erforderlich ist.

Aus der US-Patentanmeldung US 20120226823 A1 ist zudem ein computerimplementiertes Verfahren zur Dokumentenverteilung bekannt, wobei das Verfahren Schritte umfasst, auf deren Ausführung der Computer programmiert ist, wobei die Schritte umfassen: auf einem vernetzten Computer Empfangen eines Dokuments von einem Absender und Autorisierungsdaten, die mindestens einen autorisierten Empfänger für das Dokument definieren, der Absender und der autorisierte Empfänger keinen direkten Zugriff auf den vernetzten Computer besitzen, wobei mindestens einer der autorisierten Empfänger mindestens ein entsprechendes Format aus einer Vielzahl von Dateiformaten auswählt, das empfangene Dokument in das ausgewählte Format konvertiert und das konvertierte Dokument an das autorisierte Dokument verteilt Empfänger.

Aufgabe der vorliegenden Erfindung ist somit, ein Verfahren vorzustellen, welches das Problem der zu fetten Schriftgrafiken beim Druck von PDF-Dokumenten löst, ohne die aus dem Stand der Technik bekannten Nachteile aufzuweisen.

Eine erfmdungsgemäße Lösung dieser Aufgabe stellt ein Verfahren zur Verbesserung der Druckqualität von Grafikelementen in PDF-Dokumenten in der Druckvorstufe eines Druckprozesses mittels eines Rechners dar, welches aus folgenden Schritten besteht:
1. Analyse des Seiteninhaltes (11) des PDF-Dokumentes (9) durch den Rechner (6) und abspeichern des Seiteninhaltes (11) in geeigneter Datenstruktur
2. Durchsuchen der Datenstruktur nach Grafikelementen (10) die bestimmte, vorab ausgewählte Kriterien (12) hinsichtlich einer Bewertung der Höhe und Breite der Grafikpfade der vorhandenen Grafikelemente (10) im PDF-Dokument (9) erfüllen, durch den Rechner (6)
3. Auswählen von Grafikelementen (13), deren Höhe oder Breite kleiner als eine vorgegebene Höhe oder Breite sind
4. Konvertieren der ausgewählten Grafikelemente (13) in Imagemasks (14) durch Rendern der ausgewählten Grafikelemente (13) im Rechner (6), wobei zum Rendern der ausgewählten Grafikelemente (13) eine Regel angewandt wird, wodurch nur Pixel (4) im Raster (2) ausgefüllt werden, bei denen Linien (3) der Grafikelemente (10) in ihrer Breite einen bestimmten Anteil des Pixels (4) im Raster (2) überlappen
5. Ersetzen der originalen ausgewählten Grafikelemente (13) im PDF-Dokument (9) durch erzeugte Imagemasks (14) durch den Rechner (6)
6. Drucken des PDF-Dokumentes (15) mit den erzeugten Imagemasks (14) in einer Druckmaschine (7), wobei vor dem Konvertieren benachbarte ausgewählte Grafikelemente (13) für die Konvertierung zu einem gemeinsamen Grafikelement zusammengefasst werden, und wobei die Grafikelemente vektorisierte Schriftgrafiken sind.

Kernelement des Verfahrens ist dabei das Durchsuchen des PDF-Dokumentes nach Grafikelementen, insbesondere Schriftgrafiken, die entsprechend vom Anwender ausgewählte Kriterien erfüllen. Mit diesen Kriterien ist es dabei möglich, nur solche Schriftgrafiken auszuwählen, bei denen das Problem des zu fetten Drucks nach dem Rendern bei der verwendeten niedrigen Auflösung wahrscheinlich auftritt, gleichzeitig aber solche Grafikelemente, wie lange und dünne Linien, zu ignorieren, die so dünn bzw. filigran sind, dass eine Anwendung des erfindungsgemäßen Verfahrens zum aus dem Stand der Technik bekannten Verschwinden der dünnen Linie führt. Die derart ausgewählten Schriftgrafiken werden dann durch einen Rendering-Prozess in sogenannte Image Masks konvertiert. Die Image Masks sind dabei nichts anderes als Bitmaps, bei denen es möglich ist, einzelne Pixel innerhalb einer rechteckigen Fläche als "an", das heißt mit Farbe gefüllt, oder "aus", also entsprechend transparent, zu maskieren. Mit diesen so erzeugten Image Masks werden dann die originalen Schriftgrafiken im PDF-Dokument ersetzt. Das so entstandene geänderte PDF-Dokument kann dann ganz normal im Rahmen des Druckprozesses für den Druck verwendet werden. Während der Druckausgabe wird die Standard-PDF-Rasterung von Grafikelementen umgangen, wodurch der "zu-fett-Effekt" der Schriftgrafiken nicht eintritt.

Erfindungsgemäß ist dabei zudem, dass die bestimmten, vorab ausgewählten Kriterien eine Bewertung der Höhe und Breite der Grafikpfade vorhandener Schriftgrafiken im PDF-Dokument beinhalten. Zur Erkennung von Schriftgrafiken, welche für die zu fette Ausgabe empfindlich sind, kann man zum Beispiel einfach untersuchen, ob alle Pfade einer Grafik eine vorgegebene Höhe oder Breite nicht überschreiten. Eine Grafik, die eine Schrift von einer original 10-Punkt-Größe darstellt, wird mit hoher Wahrscheinlichkeit keine Pfade beinhalten, deren Höhe oder Breiter größer als 10 Punkte ist. Mit der Anwendung dieser Kriterien lässt sich die vom Anwender gewünschte Auswahl vorhandener Schriftgrafiken treffen. Für die ausgewählten Schriftgrafiken, auf die die ausgewählten Kriterien zutreffen, wird eine beliebige Rendering-Technologie angewandt. Vorzugsweise wird ein Verfahren eingesetzt, was eine Regel nutzt, die vorschreibt dass nur solche Pixel ausgefüllt werden, bei welchen die Linie der Schriftgrafik einen bestimmten Mindestanteil des Pixels im Raster ausfüllt. Dadurch kann für die ausgewählte Schriftgrafik der Effekt des zu fetten Schriftbildes vermieden werden. Da Schriftgrafiken zudem häufig als eine Grafik pro Buchstabe angelegt werden, kann es in diesem Fall sinnvoll sein, benachbarte Grafiken zunächst zusammenzufassen, um die Anzahl der zu erstellenden Image Masks klein zu halten. Damit wird der Einsatz des erfindungsgemäßen Verfahrens effizienter gestaltet, da die Anzahl der zu ersetzenden Schriftgrafiken reduziert wird.

Vorteilhafte und daher bevorzugte Weiterbildungen dieser Erfindung ergeben sich aus den dazugehörigen Unteransprüchen sowie aus der Beschreibung und den zugehörigen Zeichnungen.

Eine bevorzugte Weiterbildung des erfindungsgemäßen Verfahrens ist dabei, dass der bestimmte Anteil des Pixels, welchen die Linie der Schriftgrafik überlappen muss, 50% beträgt. Vorzugsweise wird eine 50%-Regel benutzt. Diese hat sich hinsichtlich des Vermeidens des Effektes des zu fetten Schriftbildes als am effizientesten erwiesen.

Eine weitere bevorzugte Weiterbildung des erfindungsgemäßen Verfahrens ist dabei, dass die Auflösung der Image Masks und die Druckauflösung der Druckmaschine identisch sind. Damit die originalen Schriftgrafiken 1:1 durch die entsprechend behandelten Image Masks ersetzt werden können, müssen diese eine identische Auflösung aufweisen, wie die der Druckmaschine.

Eine weitere bevorzugte Weiterbildung des erfindungsgemäßen Verfahrens ist dabei, dass der Ersatz der originalen Schriftgrafiken an der Stelle im Workflow der Vorstufe des Druckprozesses durchgeführt wird, wo eine Bearbeitung und/oder Optimierung des Seiteninhaltes des PDF-Dokumentes durchgeführt wird. Die Wandlung der Schriftgrafiken zur Image Mask kann im Workflow an beliebiger Stelle erfolgen, und zwar überall dort, wo PDF-Inhalte bearbeitet werden. Sinnvollerweise sollte sie jedoch an der Stelle im Workflow durchgeführt werden, wo ohnehin bereits eine Bearbeitung und insbesondere Optimierung des Seiteninhaltes des PDF-Dokumentes durchgeführt wird.

Eine weitere bevorzugte Weiterbildung des erfindungsgemäßen Verfahrens ist dabei, dass der Ersatz der originalen Schriftgrafiken direkt in die Ausgabe des PDF-Dokumentes integriert wird, wodurch kein Abspeichern des Seiteninhaltes des PDF-Dokumentes in der geeigneten Datenstruktur mehr notwendig ist. Die Automatik des Ersetzens der Schriftgrafiken durch Image Masks lässt sich auch direkt in die PDF-Ausgabe integrieren. Manche PDF-Ausgabesysteme bieten hier Schnittstellen an, die eine interne Bearbeitung von Seiteninhalten vorsehen, ohne dass entsprechende Änderungen im Dateisystem gesichert werden müssen. Die Ersetzung der Schriftgrafik durch die Image Mask passiert dann nur auf einer Repräsentation der PDF-Seite im Speicher.

Eine weitere bevorzugte Weiterbildung des erfindungsgemäßen Verfahrens ist dabei, dass das Drucken des PDF-Dokumentes mit den erzeugten Image Masks mit einer Digitaldruckmaschine, wie zum Beispiel einer Inkjet-Druckmaschine, durchgeführt wird. Da das Problem der zu fetten Schriftgrafiken in der Hauptsache bei niedrigen Auflösungen auftritt, wobei niedrig hier im relativen Kontext gesehen werden muss, bietet sich der Einsatz des erfindungsgemäßen Verfahrens besonders bei Digitaldruckmaschinen an, da diese aktuell noch eine geringere Auflösung als andere Druckverfahren, wie der Offset-Druck, aufweisen.

Eine weitere bevorzugte Weiterbildung des erfindungsgemäßen Verfahrens ist dabei, dass zusätzlich zum Durchsuchen der Datenstruktur nach Grafikelementen durch den Rechner, es dem Anwender möglich ist, mittels eines PDF-Editors eine manuelle Selektion der Grafikelemente, welche in Imagemasks konvertiert werden sollen, durchzuführen. Falls dem Anwender von vorherein bestimmte Grafikelemente, bzw. Schriftgrafiken bekannt sind, welche in Imagemasks konvertiert werden sollen, kann er diese selbstverständlich auch manuell mittels eines in den Workflow integrierten PDF-Editors auswählen und für die Konvertierung markieren. Gleiches ist auch nützlich, um Grafikelemente zu selektieren, die eventuell von den Kriterien der automatisierten Auswahl nicht erfasst werden.

Die Erfindung als solche sowie konstruktiv und/oder funktionell vorteilhafte Weiterbildungen der Erfindung werden nachfolgend unter Bezug auf die zugehörigen Zeichnungen anhand wenigstens eines bevorzugten Ausführungsbeispiels näher erläutert. In den Zeichnungen sind einander entsprechende Elemente mit jeweils denselben Bezugszeichen versehen.

Die Zeichnungen zeigen:
- Figur 1:: Ein Beispiel einer Schriftgrafik nach Einsatz des Standard-PDF-Rasterverfahrens
- Figur 2:: Ein Beispiel einer Schriftgrafik nach Einsatz eines Rasterverfahrens mit 50%-Regel
- Figur 3:: Den Aufbau des verwendeten Workflow-Systems
- Figur 4:: den Ablauf des erfindungsgemäßen Verfahrens in schematischer Darstellung

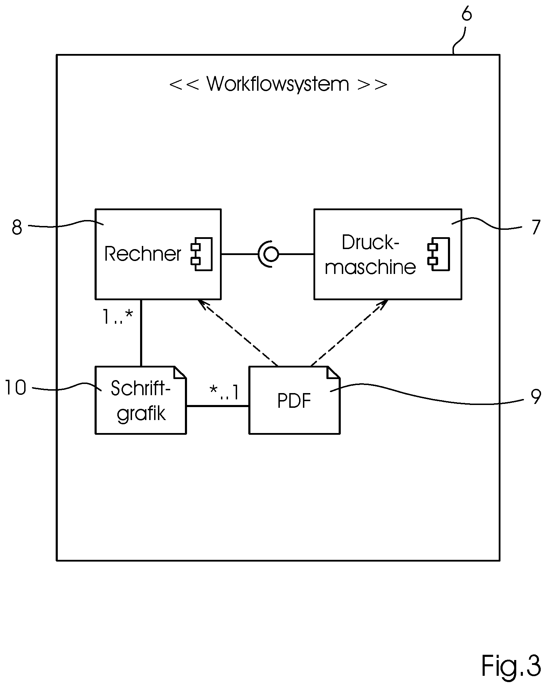

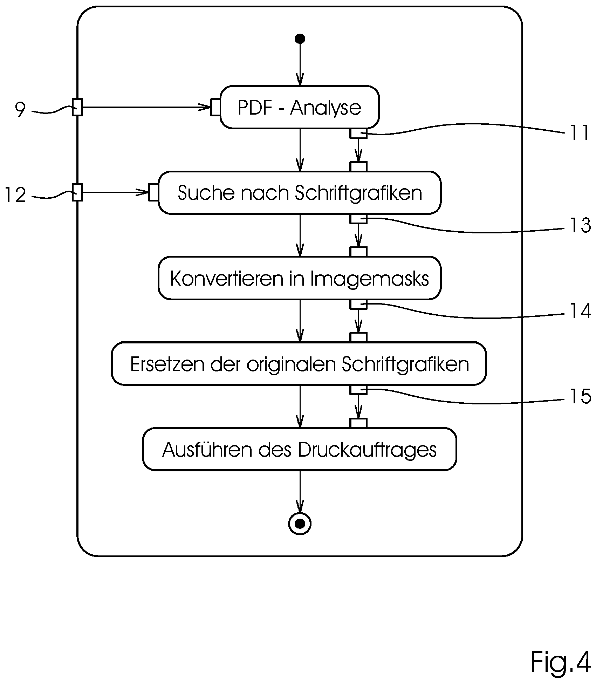

In Figur 4 wird der grundsätzliche Ablauf des erfindungsgemäßen Verfahrens in seiner bevorzugten Ausführungsvariante schematisch dargestellt. Das PDF 9 enthält eine bis mehrere Seiten 11, die entsprechend ein bis mehrere Schriftgrafiken 10 enthalten. Von einem Rechner 8 des Workflow-Systems 6 wird dabei der PDF-Seiteninhalt 11 des PDFs 9 analysiert und in einer geeigneten Datenstruktur abgespeichert, welche somit den gesamten Inhalt einer Seite 11 beschreibt. Eine Übersicht über den Aufbau des Workflow-Systems 6 ist dabei in Figur 3 näher schematisch dargestellt. In dieser Datenstruktur werden nun gefärbte gefüllte Grafiken 10 bestimmt, die vom Anwender parametrierbare Kriterien 12 erfüllen. Anhand von Kriterien 12, die vom Anwender parametrierbar sind, sucht der Rechner 6 bzw. ein entsprechendes Programm, welches auf dem Rechner 6 läuft, und welches das erfindungsgemäße Verfahren umsetzt, dann im PDF-Seiteninhalt 11 nach Schriftgrafiken 10, welche die anwenderparametrierten Kriterien 12 erfüllen. Ein denkbares Kriterium 12 ist es zum Beispiel, einfach zu untersuchen, ob alle Pfade einer Grafik 10 eine vorgegebene Höhe oder Breite nicht überschreiten. Eine Grafik 10, die eine Schrift von einer originalen 10-Punkt-Größe darstellt, wird mit hoher Wahrscheinlichkeit keine Pfade beinhalten, deren Höhe oder Breite größer als 10 Punkte ist. Auf diese Weise werden aus dem PDF-Seiteninhalt 11 die Schriftgrafiken 13 ermittelt, welche für das Problem des zu fetten Schriftdrucks anfällig sind, welche aber gleichzeitig nicht so dünn sind, dass die Schriftgrafik 13 bei Einsatz des erfindungsgemäßen Verfahrens zu verschwinden droht.

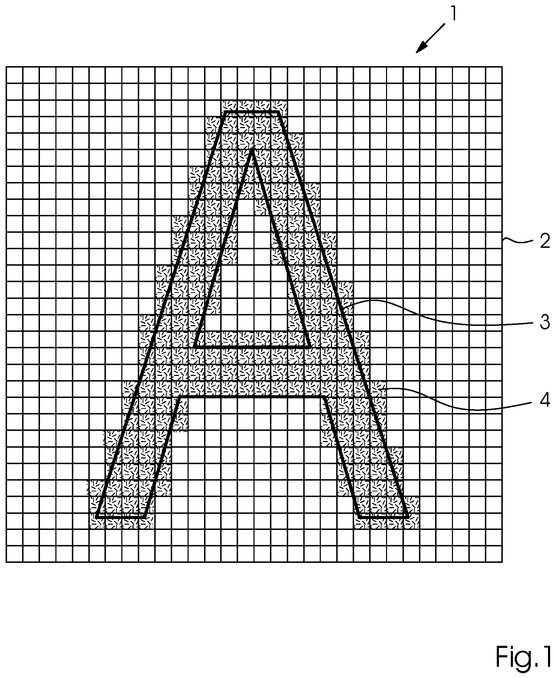

Figur 1 zeigt dabei ein Beispiel einer Schriftgrafik 1, bei welchem das Problem des zu fetten Drucks aufgetreten ist. Gut zu erkennen ist, dass alle Rasterpixel 4 im Hintergrundraster 2, welche von der Linie 3 der Schriftgrafik 1 auch nur zu einem geringen Teil abgedeckt werden, im Rahmen des Rendering-Verfahrens gefüllt werden, wodurch der zu fette Schriftzug entsteht.

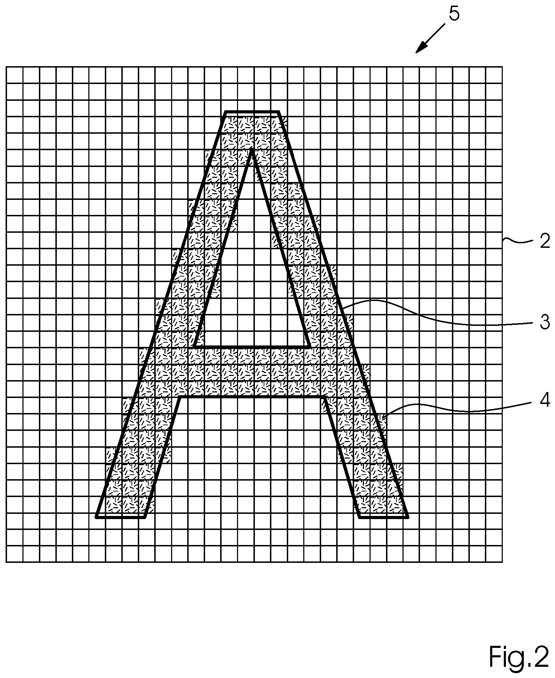

Die ausgewählten Schriftgrafiken 13 werden im Rahmen des erfindungsgemäßen Verfahrens dann in Image Masks 14 der geforderten Druckauflösung konvertiert. Für diese Konvertierung wird eine Rendering-Technologie eingesetzt, welche nicht, wie im PDF-Standard vorgesehen, jedes angeschnittene Pixel setzt, sondern eine 50%-Regel benutzt. Das heißt, es werden nur die Pixel 4 in der Image Mask 14 gesetzt, welche von der Linie 3 der Schriftgrafik 13 zu mindestens 50% überlappt werden. Das Ergebnis eines solchen 50%-Renderings sieht man in Figur 2. Hier ist die entsprechend gerasterte Schriftgrafik 5 wesentlich dünner als in Figur 1, welches den PDF-Standard darstellt. Die Image Masks 14 sind dabei für den Einsatz im 50%-Regel-Rendering deshalb geeignet, weil bei ihnen einzelne Pixel 4 innerhalb einer rechteckigen Fläche als "an", das heißt mit Farbe gefüllt, oder "aus", das heißt transparent mit durchscheinendem Hintergrund, maskierbar sind und sie damit im PDF 9 dieselben Farben zur Füllung erlauben wie normale Grafiken. Die zu Image Mask 14 konvertierten originalen Schriftgrafiken 13 werden nun standgenau durch die mit ihnen erzeugten Image Masks 14 ersetzt. Durch den Einsatz der anwenderparametrierten Kriterien 12 werden zudem auch solche Grafiken ignoriert, welche sehr dünnen und langen Linienelementen entsprechen und damit durch den Einsatz des 50%-Renderings eventuell verschwinden könnten.

Während der Druckausgabe des PDFs 15 werden dann die Image Masks 14, deren Auslösung genau zur Druckauflösung passt, 1:1 wiedergegeben, wodurch der Effekt der zu fetten Schriftgrafik umgangen wird. Mit diesem PDF 15 kann dann der Druckprozess zur Abarbeitung des Druckauftrages in der Druckmaschine 7 durchgeführt werden. Der Einsatz des erfindungsgemäßen Verfahrens in der bevorzugten Ausführungsvariante wird dabei an der Stelle im Workflow-System 6 durchgeführt, wo die PDF-Inhalte 11 bearbeitet werden.

### Bezugszeichenliste

- 1: gerendertes Grafikelement mit zu fetter Ausgabe
- 2: Hintergrundraster mit geringer Auflösung
- 3: Schriftlinie
- 4: gefülltes Pixel des gerenderten Grafikelements
- 5: gerendertes Grafikelement mit zu korrekter Ausgabe
- 6: Workflowsystem
- 7: Druckmaschine
- 8: Rechner
- 9: PDF mit Grafikelementen
- 10: im PDF vorhandenes Grafikelement
- 11: PDF-Seiteninhalt
- 12: Anwenderparametrierte Auswahlkriterien
- 13: ausgewählte Grafikelemente
- 14: konvertierte Imagemasks
- 15: PDF mit ersetzten Imagemasks

## Patentansprüche

1. Verfahren zur Verbesserung der Druckqualität von Grafikelementen in PDF-Dokumenten (9) in der Druckvorstufe eines Druckprozesses mittels eines Rechners (6) mit den folgenden Schritten:
• Analyse des Seiteninhaltes (11) des PDF-Dokumentes (9) durch den Rechner (6) und abspeichern des Seiteninhaltes (11) in geeigneter Datenstruktur
• Durchsuchen der Datenstruktur nach Grafikelementen (10) die bestimmte, vorab ausgewählte Kriterien (12) hinsichtlich einer Bewertung der Höhe und Breite der Grafikpfade der vorhandenen Grafikelemente (10) im PDF-Dokument (9) erfüllen, durch den Rechner (6)
• Auswählen von Grafikelementen (13), deren Höhe oder Breite kleiner als eine vorgegebene Höhe oder Breite sind
• Konvertieren der ausgewählten Grafikelemente (13) in Imagemasks (14) durch Rendern der ausgewählten Grafikelemente (13) im Rechner (6), wobei zum Rendern der ausgewählten Grafikelemente (13) eine Regel angewandt wird, wodurch nur Pixel (4) im Raster (2) ausgefüllt werden, bei denen Linien (3) der Grafikelemente (10) in ihrer Breite einen bestimmten Anteil des Pixels (4) im Raster (2) überlappen
• Ersetzen der originalen ausgewählten Grafikelemente (13) im PDF-Dokument (9) durch erzeugte Imagemasks (14) durch den Rechner (6)
• Drucken des PDF-Dokumentes (15) mit den erzeugten Imagemasks (14) in einer Druckmaschine (7), wobei vor dem Konvertieren benachbarte ausgewählte Grafikelemente (13) für die Konvertierung zu einem gemeinsamen Grafikelement zusammengefasst werden, und wobei die Grafikelemente vektorisierte Schriftgrafiken sind.

2. Verfahren nach Anspruch 1,
wobei der bestimmte Anteil des Pixels (4), welchen die Linie (3) der Grafikelemente (10) überlappen muss, 50% beträgt.

3. Verfahren nach einem der vorherigen Ansprüche,
wobei die Auflösung der Imagemasks (14) und die Druckauflösung der Druckmaschine (7) identisch sind.

4. Verfahren nach einem der vorherigen Ansprüche,
wobei der Ersatz der originalen Grafikelemente (13) an der Stelle im Workflow (6) der Vorstufe des Druckprozesses durchgeführt wird, wo eine Bearbeitung und/oder Optimierung des Seiteninhaltes (11) des PDF-Dokumentes (9) durchgeführt wird.

5. Verfahren nach einem der vorherigen Ansprüche,
wobei der Ersatz der originalen Grafikelemente (13) direkt in die Ausgabe des PDF-Dokumentes (15) integriert wird, wodurch kein Abspeichern des Seiteninhaltes (11) des PDF-Dokumentes (15) in der geeigneten Datenstruktur mehr notwendig ist.

6. Verfahren nach einem der vorherigen Ansprüche,
wobei das Drucken des PDF-Dokumentes (15) mit den erzeugten Imagemasks (14) mit einer Digitaldruckmaschine (7), wie zum Beispiel einer Inkjet-Druckmaschine, durchgeführt wird.

7. Verfahren nach einem der vorherigen Ansprüche,
wobei zusätzlich zum Durchsuchen der Datenstruktur nach Grafikelementen (10) durch den Rechner (6), es einem Anwender möglich ist, mittels eines PDF-Editors eine manuelle Selektion der Grafikelemente (10), welche in Imagemasks (14) konvertiert werden sollen, durchzuführen.

## Claims

1. Method of improving the print quality of graphic elements in PDF documents (9) at a prepress stage of the printing operation by means of a computer (6), the method comprising the steps of
• analyzing the page content (11) of the PDF document (9) by means of the computer (6) and saving the page content (11) in a suitable data structure
• searching the data structure for graphic elements (10) that meet specific preselected criteria (12) in terms of an assessment of the height and width of the graphic paths of the graphics elements (10) present in the PDF document (9) by means of the computer (6)
• selecting graphic elements (13), the height or width of which is smaller than a predefined height or width
• converting the selected graphic elements (13) into image masks (14) by rendering the selected graphic elements (13) in the computer (6), wherein a rule is applied to render the selected graphic elements (13), said rule causing only pixels (4) in the screen (2) to be filled of which lines (3) of the graphic elements (10) in their width overlap a specific portion of the pixel (4) in the screen (2)
• replacing the selected original graphic elements (13) in the PDF document (9) with generated image masks (14) by means of the computer (6)
• printing the PDF document (15) with the generated image masks (14) in a printing machine (7), wherein before the converting step, selected neighboring graphic elements (13) are combined to form a common graphic element for the conversion and wherein the graphic elements are vectorized text graphics.

2. Method according to claim 1,
wherein the specific portion of the pixel (4) that the line (3) of the graphic elements (10) must overlap is 50%.

3. Method according to any one of the preceding claims,
wherein the resolution of the image masks (14) and the print resolution of the printing machine (7) are identical.

4. Method according to any one of the preceding claims,
wherein the replacement of the original graphic elements (13) is carried out at a point in the work flow (6) of the prepress stage of the printing operation when the page content (11) of the PDF document (9) is edited and/or optimized.

5. Method according to any one of the preceding claims,
wherein the replacement of the original graphic elements (13) is integrated directly into the output of the PDF document (15), thus eliminating the need to save the page content (11) of the PDF document (15) in the suitable data structure.

6. Method according to any one of the preceding claims,
wherein the step of printing the PDF document (15) with the generated image masks (14) is done with a digital printing machine (7) such as an inkjet printing machine.

7. Method according to any one of the preceding claims,
wherein in addition to searching the data structure for graphic elements (10) by means of the computer, by means of a PDF editor an operator is capable of manually selecting the graphic elements (10) which are to be converted into image masks (14).

## Revendications

1. Procédé d'amélioration de la qualité d'impression d'éléments graphiques dans des documents PDF (9) dans la prépresse d'un processus d'impression au moyen d'un ordinateur (6), se composant des étapes suivantes :
• Analyse du contenu de la page (11) du document PDF (9) par l'ordinateur (6) et mémorisation du contenu de la page (11) dans une structure de données appropriée
• Recherche dans la structure de données d'éléments graphiques (10) répondant à certains critères présélectionnés (12) en ce qui concerne une évaluation par l'ordinateur (6) de la hauteur et de la largeur des tracés des éléments graphiques (10) présents dans le document PDF (9)
• Sélection d'éléments graphiques (13) dont la hauteur ou la largeur est inférieure à une hauteur ou une largeur prédéterminées
• Conversion des éléments graphiques sélectionnés (13) en masques d'image (14) par le rendu des éléments graphiques sélectionnés (13) dans l'ordinateur (6), une règle étant appliquée pour le rendu des éléments graphiques sélectionnés (13), selon laquelle seuls des pixels (4) de la trame (2) sont remplis lorsque les lignes (3) des éléments graphiques (10) recouvrent en largeur une certaine proportion du pixel (4) de la trame (2)
• Remplacement des éléments graphiques d'origine sélectionnés (13) dans le document PDF (9) par des masques d'images générés (14) par l'ordinateur (6)
• Impression du document PDF (15) avec les masques d'image générés (14) dans une machine à imprimer (7), des éléments graphiques sélectionnés adjacents avant la conversion (13) ayant été combinés pour la conversion en un élément graphique commun et les éléments graphiques étant des graphiques de police vectorisés.

2. Procédé selon la revendication 1,
pour lequel
la proportion déterminée du pixel (4) que la ligne (3) des éléments graphiques (10) doit recouvrir est de 50 %.

3. Procédé selon l'une des revendications précédentes,
pour lequel
la résolution des masques d'image (14) et la résolution d'impression de la machine à imprimer (7) sont identiques.

4. Procédé selon l'une des revendications précédentes,
pour lequel
le remplacement des éléments graphiques d'origine (13) est effectué au point du flux de production (6) de la prépresse du processus d'impression, où l'édition et/ou l'optimisation du contenu de la page (11) du document PDF (9) sont effectuées.

5. Procédé selon l'une des revendications précédentes,
pour lequel
le remplacement des éléments graphiques d'origine (13) est directement intégré dans la sortie du document PDF (15), de sorte qu'il n'est plus nécessaire de mémoriser le contenu de la page (11) du document PDF (15) dans la structure de données appropriée.

6. Procédé selon l'une des revendications précédentes,
pour lequel
l'impression du document PDF (15) avec les masques d'image générés (14) est effectuée avec une machine à imprimer (7), telle qu'une machine à imprimer à jet d'encre.

7. Procédé selon l'une des revendications précédentes,
pour lequel
en plus de la recherche d'éléments graphiques (10) dans la structure des données par l'ordinateur (6), il est possible pour un utilisateur d'effectuer une sélection manuelle des éléments graphiques (10) à convertir en masques d'image (14) au moyen d'un éditeur PDF.
